# EUROPEAN PATENT APPLICATION

(11) **EP 2 256 683 A1**
(43) Date of publication of application: **01.12.2010**
(21) Application number: 10163337.8
(22) Date of filing: 19.05.2010
(51) Int. Cl.: G06Q 30/00

(54) **System and method for managing a connection between an advertiser and a user of a website and/or other Internet communication tools**

(30) Priority: 29.05.2009 IT MI20090957
(71) Applicant: 4W Marketplace S.r.l., 20139 Milano (IT)
(72) Inventor: Ronchini, Gabriele, 20139 Milano (IT)
(74) Representative: Modiano, Micaela Nadia

(57) **Abstract**

A system (1) for managing the connection between an advertiser (3) and a user (5) of a website and/or of Internet communication tools, comprising means (2) for managing an advert to be placed online on a website and/or in Internet communication tools, means (4) for acquiring user data, and telephone connection means (6) for connecting said user (5) to said advertiser (3), said advert management means (2) being adapted to allow the activation of said telephone connection means (6) only until a telephone cost amount predefined by said advertiser (3) is reached.

## Description

The present invention refers to a system and a method for managing a connection between an advertiser and a user of a website and/or of internet communication tools. More specifically, the invention refers to a system and a method for managing a telephone connection between an advertiser of a website and a user of such website and/or of internet communication tools.

Websites and/or internet communication tools are known (such as for example email, online chat and the like) which usually have advertisements displayed on the website page, and which the user of the site can access by clicking on the advertisement itself.

This opens the webpage associated with the advertiser on whose advertisement the user has clicked. However, it is not possible for the user to make direct telephone contact with the advertiser to obtain information.

Recently, however, systems have been offered that make it possible to put users of a website in telephone communication with a call-centre of the advertiser (or possibly with the advertiser himself), which is on the website which the user is browsing. This makes it possible for the user to make a call substantially automatically to the call centre of the advertiser, to obtain the desired information.

However, the service described above generally, but not necessarily, makes use of a premium telephone number, activated by way of an agreement between the advertiser and the telephone operator. The premium telephone number described above does not allow the advertiser to have total control of the level of costs of the service, moreover it does not make it possible to avail of more competitive traffic rates, since the intermediation of the telephone operator is always present, and in addition it currently does not make it possible to monitor the progress of the service.

In practice, therefore, the advertiser does not have a platform that enables him to clearly and simply manage the service of automated calls by users of the advertiser's website, with the faculty, for the advertiser, of setting the costs of the individual telephone calls, the upper limit for costs (or, equivalently, the maximum number of calls) per day, per week or per month, and moreover it does not make it possible to pay for the service directly via telematic network, in real time.

The aim of the present invention is to provide a system and a method for managing a connection between an advertiser and a user of a website and/or of internet communication tools on which the advertiser has placed his advertisement, which automates the connection between the user and the advertiser as far as possible, while at the same time giving the advertiser total control of the service.

Within this aim, an object of the present invention is to provide a system and a method for managing a connection between the advertiser and a user of a website and/or of internet communication tools, which make it possible for the advertiser to keep the costs associated with the service for connecting the advertiser and the user of the website under control.

Another object of the present invention is to provide a system and a method for managing a connection between an advertiser and a user of a website and/or of internet communication tools, that are highly reliable, relatively easy to implement and low cost.

This aim, as well as these and other objects which will become better apparent hereinafter, are achieved by a system for managing a connection between an advertiser and a user of a website and/or of Internet communication tools, comprising means for managing an advert to be placed online on a website and/or in Internet communication tools, means for acquiring user data, and telephone connection means for connecting said user to said advertiser, **characterized in that** said advert management means are adapted to allow the activation of said telephone connection means only until a telephone cost amount predefined by said advertiser is reached.

Further characteristics and advantages of the invention will become better apparent from the description of a preferred, but not exclusive, embodiment of the system and of the method according to the present invention, illustrated by way of a non-limiting example in the accompanying drawings, wherein:

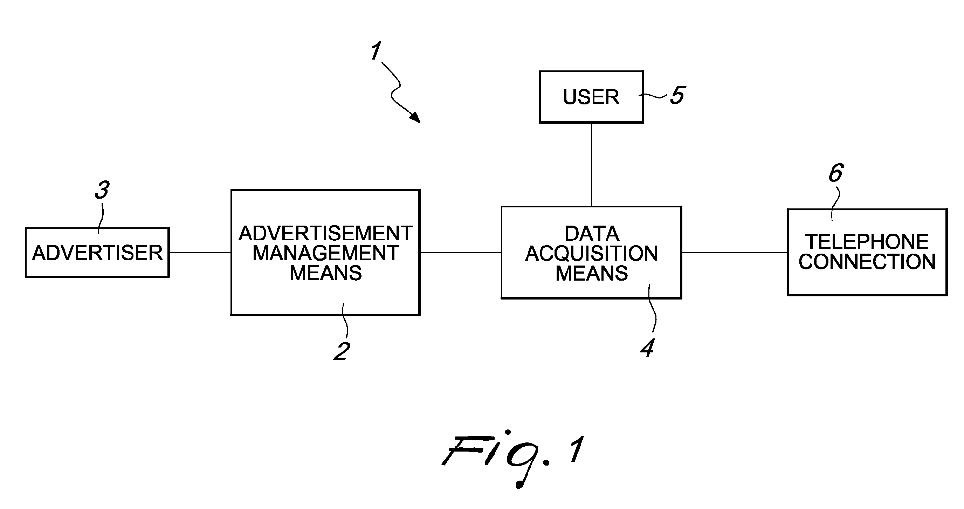

Figure 1 shows, in the form of a block diagram, the system according to the present invention; and
Figure 2 shows, in the form of a flow diagram, the method according to the present invention.

With reference to the figures, the system according to the present invention, globally indicated with the reference numeral 1, comprises means 2 adapted to manage an advertisement to be placed on the desired website and/or internet communication tools.

Hereinafter, for the sake of brevity, reference will be made exclusively to a website, by this however meaning that the system according to the invention is equally applicable to internet communication tools, as previously defined.

The means 2 allow an advertiser 3 to acquire an advertisement online, prepaying directly online, setting the number of telephone calls that the advertiser can answer, the associated budget for each telephone call and an overall budget, for example per day.

Thereby, the advertiser 3 can set the daily limits of traffic/calls, in such a way as to not exceed a pre-established amount and therefore always have the costs of the service that he has requested under control.

Moreover the system has means 4 adapted to acquire the data of at least one user 5 who wishes to make a telephone connection with the advertiser 3, with the user's data, specifically the telephone number of such user, which are acquired anonymously. In practice, the advertiser 3 will not know the telephone number of the user 5 when the user 5 requests a telephone connection with the advertiser 3 and the advertiser 3 makes such telephone connection.

Moreover, the means 4 of acquiring the user's data are capable of associating the user's data with the number of the advertisement on which the user clicked on the website.

Moreover the system has means 6 adapted to enable a telephone connection between the user 5 and the advertiser 3, with the advertiser 3 who calls the user 5 at the telephone number that the user has provided, but without the advertiser 3 knowing the telephone number of the user 5.

The means 2 of managing the advertisement are adapted to allow the activation of means of telephone connection 6 only until an amount of telephone cost preset by the advertiser 3 is reached or, equivalently, until a preset maximum number of calls is reached.

In practice, the system according to the invention allows a user, once he clicks on an advertisement present on un website which the user is browsing, to establish a connection with the advertiser owning the advertisement, with the advantage that the telephone connection will be made between the advertiser 3 and the user 5 without the former knowing the telephone number of the latter.

Moreover, the advertiser 3, via the means of management 2, can manage, in a completely automated manner, the placing on-line of the advertisement and of the associated service to activate the telephone connection between the advertiser 3 and the user 5, also setting the associated daily limits of traffic/calls.

In particular, the advertiser can set, via the means of management 2, the type of service that he wishes to offer, for example limiting the service to a determined number of calls and deactivating it when such number is reached.

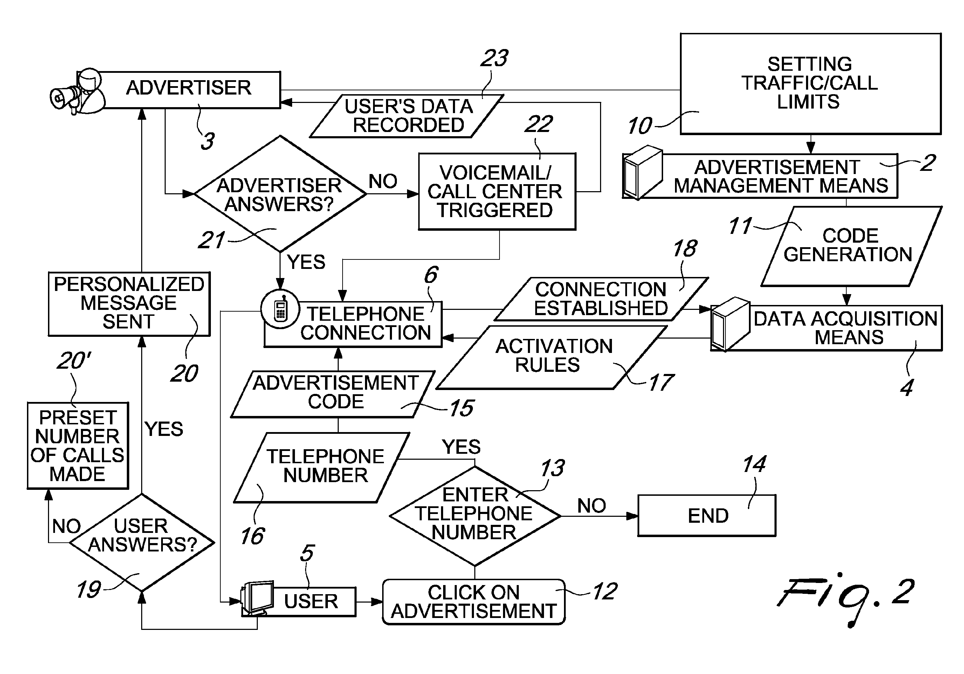

Figure 2 shows, using a flow diagram, the operation of the system, according to the invention, the operation being as follows.

The advertiser 3 acquires an advertisement by prepaying for it online, setting the traffic/call limits, phase 10, and the means of management 2 generate a code for the telephone number of the advertiser 3, together with the service activation rules, phase 11. The service activation rules might, for example, concern the variability of the cost of the calls depending on the time bands and the like.

When the user 5 clicks on the advertisement of the advertiser 3, phase 12, he is asked to enter his telephone number, phase 13. If the user 5 does not insert his telephone number, the process is terminated, phase 14, otherwise, the user's telephone number together with the code of the advertisement, respectively phases 15 and 16, are sent to the means of communication 6 which receive from the means of acquisition 4 the code of the advertisement, the telephone number of the user 5, together with the activation rules, phase 17.

At this point, phase 18, the connection is made between the advertiser 3 and the user 5. To this end, it is checked, phase 19, to see if the user 5 answers. In the affirmative case, phase 20, a personalised message is sent which informs the user 5 that he is about to be put into contact with the advertiser 3.

In the negative case, i.e. if the user 5 does not answer, a preset number of call attempts is made, phase 20', at the end of which an error message is generated.

If the user 5 answers, subsequently, phase 21, it is checked to see if the advertiser answers, and, in the affirmative case, the connection takes place, phase 18, while in the negative case, phase 22, a voicemail/call center is triggered to record the user's data, phase 23.

As can be seen, the system and the method according to the invention make it possible for the advertiser 3 to contact, on request, the user 5, but without the advertiser 3 being able to know the telephone number of the user 5.

Moreover, via the system according to the invention, the advertiser 3 has the means of management 2 which make it possible to configure the advertisement, the number of calls allowed per day, and, in any case, keep the costs of the telephone calls correlated with the abovementioned advertisement under control (by setting the maximum cost per day, per week, per month and so on).

Moreover, the advertiser can pay for the service directly on-line, for example by credit card, in such a way as to activate a certain amount of credit to be used for the service.

If the credit is not used up within the preset time, it can be used in the following days.

Conveniently, the advertisement on the website is provided with an icon which tells the user that the service is available.

When the credit is used up, or when the maximum daily number of calls allowed is reached, the icon is removed and the service is therefore deactivated.

Moreover, the system according to the invention makes it possible to keep track, by means of an information report panel, of the activities in progress and, in general, of the progress of the advertiser's advertising campaign.

In practice it has been found that the system and method according to the present invention fully achieve the intended aim and objects.

The system and method, thus conceived, are capable of undergoing numerous modifications and variations, all within the aim of the appended claims; moreover, all the details may be replaced by other technically equivalent elements.

The disclosures in Italian Patent Application No. MI2009A000957 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A system (1) for managing a connection between an advertiser (3) and a user (5) of a website and/or of Internet communication tools, comprising means (2) for managing an advert to be placed online on a website and/or in Internet communication tools, means (4) for acquiring user data, and telephone connection means (6) for connecting said user (5) to said advertiser (3), **characterized in that** said advert management means (2) are adapted to allow the activation of said telephone connection means (6) only until a telephone cost amount predefined by said advertiser (3) is reached.

2. The system according to claim 1, **characterized in that** said user data acquisition means (4) are adapted to acquire the telephone number of the user (5) anonymously, in order to allow the connection of said user (5) to said advertiser (3) without said advertiser (3) becoming aware of the telephone number of said user (5).

3. The system according to claim 1, **characterized in that** said means (2) for the management of said advert comprise means that are adapted to allow the purchase of said advert and online payment, the determination of the allowable traffic/calls per day correlated to said advert, and means for reporting activities performed in relation to said advert.

4. The system according to claim 1, **characterized in that** said acquisition means (4) are adapted to acquire said telephone number of said user with pairing with a numbering associated with said advert.

5. The system according to one or more of the preceding claims, **characterized in that** said telephone connection means (6) receive the telephone number of said user (5) and the code and the telephone number of said advertiser (3) together with the service activation rules.

6. A method for managing a connection between an advertiser (3) and a user (5) of a website and/or Internet communication tools, comprising the steps of:
performing, on the part of the user (5), a selection of an advert on a website and/or in Internet communication tools;
communicating, on the part of said user (5), his own telephone number; and
activating a call of the advertiser (3) of said advert to said user (5);
**characterized in that** it comprises a step of activating said call of the advertiser to said user (5) only until a telephone expense amount predefined by said advertiser (3) is reached.

7. The method according to claim 6, **characterized in that** the step of activating said call of said advertiser (3) to said user (5) is performed without said advertiser (3) being aware of the telephone number of said user (5).

8. The method according to claim 6, **characterized** that it comprises the steps of:
setting, on the part of said advertiser (3), the type of advert wanted;
purchasing online the number of calls that one wishes to receive for said advert;
setting the daily limits of traffic/calls regarding said advert.

9. The method according to claim 6 or 7, **characterized in that** it comprises the additional steps of:
making a report of the calls made by said advertiser (3) in relation to said advert;
displaying the residual credit of said advertiser (3).

10. The method according to one or more of claims 6 to 9, **characterized in that** upon reaching said telephone expense amount that corresponds to a given number of daily telephone calls reached, said advert does not allow any user (5), for the current day, to contact said advertiser (3) by telephone.
